# EUROPÄISCHE PATENTSCHRIFT

(11) **EP 0 349 937 B1**
(45) Veröffentlichungstag und Bekanntmachung des Hinweises auf die Patenterteilung: **20.10.1993**
(21) Anmeldenummer: 89112054.5
(22) Anmeldetag: 01.07.1989
(51) Int. Cl.: H02B 1/48, H02G 3/12

(54) **Elektrisches Installationsgerät**
Electrical installation apparatus
Appareil d'installation électrique

(30) Priorität: 08.07.1988 DE 3823117
(43) Veröffentlichungstag der Anmeldung: 10.01.1990
(73) Patentinhaber: Asea Brown Boveri Aktiengesellschaft, 68309 Mannheim (DE)
(72) Erfinder: Schulte-Lippern, Günter, D-5880 Lüdenscheid (DE)
(74) Vertreter: Rupprecht, Klaus, Dipl.-Ing.

(56) Entgegenhaltungen:
- EP-A- 0 071 104
- DE-A- 2 051 184
- FR-A- 745 808

## Beschreibung

Die Erfindung betrifft ein mit Hilfe einer Spreizkrallenbefestigung in einer Unterputz-Wandeinbaudose festgelegtes elektrisches Installationsgerät der im Oberbegriff des Anspruchs 1 genannten Art.

Spreizkrallenbefestigungen für in Unterputz-Wandeinbaudosen zu installierende Installationsgeräte, wie Schalter, Taster, Steckdosen, Dimmer und dergleichen, sind in zahlreichen Ausführungsformen bekannt. Durch Festziehen der am Tragring bekanntermaßen angeordneten Stellschrauben werden die Spreizkrallen vom Installationsgerät abgespreizt, wobei sich endseitig angeordnete Spreizkrallenspitzen in die Wandung der Unterputzdosen eingraben und das Installationsgerät verankern.

Wie aus dem DE-GM 19 13 681 bekannt ist, werden die Installationsgeräte herkömmlicherweise durch einen Gummiring komplettiert, welcher so über den Sockel des Installationsgeräts geschoben wird, daß seine Spreizkrallen bei gelöster Stellschraube dicht am Sockel gehalten werden. Dadurch wird das Einsetzen des Installationsgeräts in die Unterputzdose wesentlich erleichtert. Würde ein derartiger Gummiring nicht vorhanden sein, würden die Spreizkrallen infolge ihrer Beweglichkeit das Einsetzen des Installationsgerätes wesentlich erschweren, wenn nicht sogar sperren. Die gelockerte Spreizkralle hat nämlich bei bestimmten Stellungen des Installationsgeräts oder bei geringster Berührung der Wandeinbaudose die Tendenz sich selbständig weiteraufzuspreizen, wodurch die Installation bisweilen regelrecht blockiert wird.

Nachteilig ist hierbei, daß der Gummiring mit der Zeit, bedingt durch Temperatur- und Luftfeuchtigkeitsschwankungen seine Elastizität verliert und verrottet. Dadurch wird die Montage erschwert, sofern zwischen der Herstellung des Installationsgerätes und seiner Unterputz-Endmontage längere Zeit verstreicht. Auch wenn das Installationsgerät - wie üblicherweise vorgesehen - längere Zeit in der Wandeinbaudose verbleibt, gestaltet sich wegen der dann eingeschränkten Funktionsfähigkeit des Gummirings die Demontage des Installationsgeräts ebenfalls umständlich, da erst der Spreizkralleneingriff mit der Dosenwandung gelöst werden muß, bevor sich das Installationsgerät herausnehmen läßt.

Aus der DE-OS 26 11 654 ist eine Spreizkrallenbefestigung bekannt, welche die bei Verwendung von Gummiringen geschilderten Nachteile durch die Verwendung eines Metallfederbügels zu vermeiden sucht. Die Metallbügelfeder wird derart am Tragring befestigt, daß die Spreizkrallen bei gelöster Stellschraube dicht am Sockel anliegen. Wenn die Stellschrauben angezogen werden, schwenken die Spreizkrallen gegen die Kraft der Federschenkel der Metallbügelfeder nach außen und greifen mit ihren Spitzen in die Unterputzdose ein. Wenn die Stellschrauben gelöst werden, drückt die Federkraft der Metallfederbügel die Spreizkrallen wieder in die Ruhestellung am Gerätesockel zurück, womit dann das Gerät ohne Behinderung aus der Unterputzdose entnommen werden kann.

Aus der DE-A-2 051 184 und aus der EP-A1-0 071 104 sind Spreizenbefestigungen für elektrische Installationsgeräte bekannt, bei welchen die Spreizen jeweils von einer Blattfeder beaufschlagt sind, die sich an Teilen des Tragrings abstützt bzw. daran befestigt ist und parallel zu einem Spreizenschenkel ausgerichtet ist.

Als ungünstig anzusehen ist bei den bekannten Ausgestaltungen die relativ umständliche Montage der Federn bzw. der Spreizen.

Ausgehend vom vorstehend dargelegten Stand der Technik ist es Aufgabe vorliegender Erfindung, unter Vermeidung der im Stand der Technik geschilderten Nachteile die Spreizkrallen der Spreizkrallenbefestigung des gattungsgemäßen Installationsgeräts so auszubilden, daß mit einfachen Mitteln, fertigungstechnisch vertretbarem Aufwand sowie leicht zu bewerkstelligender Montage bei gelockerter Stellschraube eine stabile und dauerhafte Spreizenrückstellung gewährleistet ist, welche sowohl die Montage als auch die Demontage des Installationsgeräts wesentlich erleichtert.

Diese Aufgabe wird durch die in den nebengeordneten Ansprüchen 1 und 2 näher gekennzeichneten Merkmale gelöst. Vorteilhafte Ausführungsformen sind in den Unteranspüchen näher gekennzeichnet.

Die Erfindung soll nachstehend anhand der Zeichnung näher erläutert und beschrieben werden.

Es zeigen:
- Figur 1:: Eine Seitenansicht eines in einer Unterputz-Wandeinbaudose zu installierenden Steckdosensockels mit einer gelockerten Stellschraube und mit einer angezogenen Stellschraube der Spreizkrallenbefestigung,
- Figur 2:: eine perspektivische Ansicht einer herkömmlichen Spreizkralle,
- Figur 3:: eine Aufsicht auf die erfindungsgemäße Spreizkralle,
- Figur 4:: eine Schnittansicht der erfindungsgemäßen Spreizkralle entsprechend der in Figur 3 eingezeichneten Schnittlinie IV-IV.

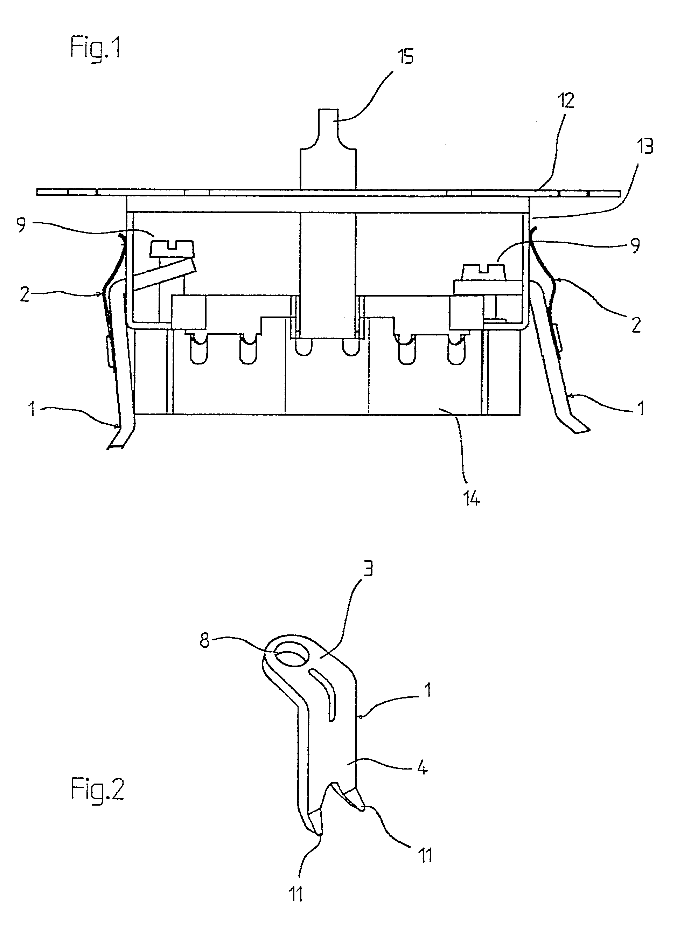

Figur 1 zeigt als Ausführungsbeispiel die Seitenansicht eines in einer Unterputz-Wandeinbaudose zu installierenden Sockels 14 nebst Erdungsbügel 15 einer Steckdose. Der Sockel 14 ist an einem Tragring 12 befestigt. Im Sockel 14 werden Stellschrauben 9 geführt. Durch Festziehen der Stellschrauben 9 läßt sich ein Abspreizen von Spreizkrallen 1 erreichen, während durch Lockern der Stellschrauben 9 aufgrund der Federrückstellkraft einer Blattfeder 2 eine Rückstellung der Spreizkrallen 1 erreicht wird. Die linke Stellschraube 9 in Figur 1 ist gelockert. Die durch sie in ihrer Stellung veränderbare Spreizkralle 1 liegt dicht am Sockel 14 an. Die rechte Stellschraube 9 in Figur 1 ist festgezogen. Die durch sie geführte Spreizkralle 1 ist vom Sockel 14 abgespreizt und bewirkt dann eine Verankerung des Installationsgeräts in der Unterputz-Wandeinbaudose.

Figur 2 zeigt eine herkömmliche Spreizkralle 1 mit einem ersten Spreizkrallenschenkel 3 und einem zweiten Spreizkrallenschenkel 4. Durch eine Stellschraubendurchführung 8 wird die Stellschraube 9 geführt und die Spreizkralle 1 am Sockel 14 festgelegt. Am freien Ende des zweiten Spreizkrallenschenkels 4 sind Krallen 11 ausgebildet.

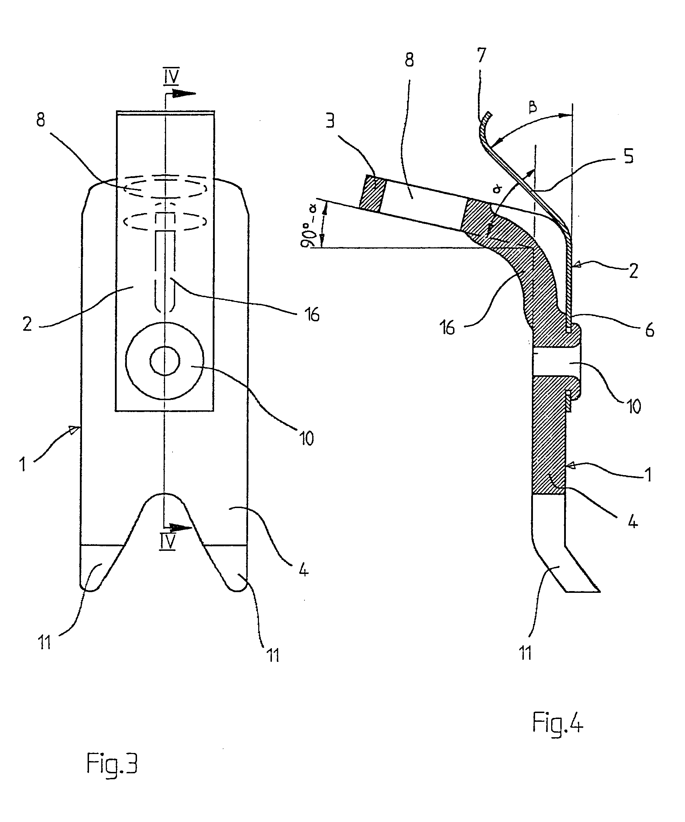

Figur 3 zeigt eine Aufsicht auf die erfindungsgemäße Spreizkralle mit der am zweiten Spreizkrallenschenkel 4 befestigten Blattfeder 2. Eine Stabilisierungssicke 16 gewährleistet auch unter Belastung die Einhaltung eines Spreizkrallenknickwinkels α, unter welchem der erste Spreizkrallenschenkel 3 gegenüber dem zweiten Spreizkrallenschenkel 4 abgewinkelt ist.

Figur 4 zeigt eine Schnittansicht durch die erfindungsgemäße Spreizkralle 1 mit Blattfeder 2 gemäß der Schnittlinie IV-IV in Figur 3. Die Spreizkralle 1 weist den ersten Spreizkrallenschenkel 3 auf, welcher unter dem Spreizkrallenknickwinkel α gegenüber dem zweiten Spreizkrallenschenkel 4 abgewinkelt ist. Im ersten Spreizkrallenschenkel 3 ist die Stellschraubendurchführung 8 ausgebildet, mittels derer die durch die Stellschraubendurchführung 8 geführte Stellschraube 9 die Spreizkralle 1 am Sockel 14 festlegt. Auf dem zweiten Spreizkrallenschenkel 4 ist das freie Ende eines zweiten Blattfederschenkels 6 der federelastischen Blattfeder 2 befestigt. Hierzu ist im zweiten Spreizkrallenschenkel 4 ein Durchzug 10 ausgestaltet, dessen überstehender Rand auf der zu befestigenden Blattfeder 2 vertaumelt bzw. verbördelt ist. Der Durchzug 10 kann aber auch als Nietenloch ausgebildet sein, in welches zum Zwecke der Vernietung der Blattfeder 2 mit der Spreizkralle 1 der Nietenschaft eine Hohlniet verbringbar ist. Die Blattfeder 2 kann neben Nieten, Taumeln oder Bördeln u.a. auch durch Schweißen, Kleben oder Klemmen an der Spreizkralle 1 befestigt werden. Die Blattfeder 2 weist einen ersten Blattfederschenkel 5 auf, welcher unter einem Blattfederknickwinkel β<α gegenüber dem zweiten Blattfederschenkel 6 abgewinkelt ist. Der zweite Blattfederschenkel 6 und der zweite Spreizkrallenschenkel 4 sind parallel ausgerichtet. Am freien Ende des ersten Blattfederschenkels 5 ist ein Gleitbogenstück 7 ausgebildet, welches auf Teilen des Tragrings 12, insbesondere einem Abstandssteg 13 des Tragrings 12 aufliegt und sich dort unter Vorspannung abstützt.

Gemäß einem hier nicht abgebildeten weiteren Ausführungsbeispiel kann das freie Ende des ersten Blattfederschenkels 5 der federelastischen Blattfeder 2 auch an Teilen des Tragrings 12 befestigt sein. Hierbei sind der zweite Blattfederschenkel 6 und der zweite Spreizkrallenschenkel 4 ebenfalls parallel ausgerichtet. Der erste Blattfederschenkel 5 ist gegenüber dem zweiten Blattfederschenkel 6 unter dem Blattfederknickwinkel β<α abgewinkelt. Am freien Ende des zweiten Blattfederschenkels 6 ist ein auf dem zweiten Spreizkrallenschenkel 4 aufliegendes und sich dort unter Vorspannung abstützendes Gleitbogenstück 7 ausgebildet. Vorteilhafterweise wird in diesem weiteren Ausführungsbeispiel der Tragring 12 und die zugeordnete Blattfeder 2 materialeinheitlich einstückig ausgebildet. Hierdurch werden weitere Fertigungs- und Montagevorteile erzielt.

Im folgenden soll die Funktion der erfindungsgemäßen Spreizkrallenbefestigung beschrieben werden. Wie insbesondere aus Figur 1 zu ersehen ist, liegt bei gelockerter Stellschraube 9 die Spreizkralle 1 dicht am Sockel 14 an, da die durch die Knickung der Blattfeder 2 bewirkte Vorspannung die Spreizkralle 1 an den Sockel 14 herandrückt. In diesem Zustand ist eine einfache Montage und Demontage des Installationsgeräts möglich. Wenn das Installationsgerät in die Unterputzdose eingesetzt ist, wird durch Festziehen der Stellschrauben 9 die Spreizkralle 1 abgespreizt, wodurch das Gleitbogenstück 7 der Blattfeder 2 auf dem Abstandssteg 13 des Tragrings 12 leicht nach oben gleitet.

Durch die erfindungsgemäße Ausbildung der Spreizkrallenbefestigung mit einer durch die Blattfeder 2 stabilisierten Spreizkrallenrückstellung ist eine problemlose Montage und Demontage des Installationsgeräts gewährleistet.

### Bezugszeichenliste

- 1: Spreizkralle
- 2: Blattfeder
- 3: erster Spreizkrallenschenkel
- 4: zweiter Spreizkrallenschenkel
- 5: erster Blattfederschenkel
- 6: zweiter Blattfederschenkel
- 7: Gleitbogenstück
- 8: Stellschraubendurchführung
- 9: Stellschraube
- 10: Durchzug
- 11: Kralle
- 12: Tragring
- 13: Abstandssteg von 12
- 14: Steckdosensockel
- 15: Erdungsbügel
- 16: Stabilisierungssicke

## Patentansprüche

1. Elektrisches Installationsgerät, welches mit Hilfe einer Spreizkrallenbefestigung in einer Unterputz-Wandeinbaudose festgelegt ist, mit einem Tragring (12), sowie zwei an diesem paarig gegenüberliegend angeordneten, jeweils von einer Blattfeder (2) beaufschlagten Spreizkrallen (1), deren erster Spreizkrallenschenkel (3) mittels einer Stellschraube (9) an Teilen des Tragrings (12) befestigt ist und deren zweiter Spreizkrallenschenkel (4) unter einem Spreizkrallenknickwinkel α gegenüber dem ersten Spreizkrallenschenkel (3) abgewinkelt ist, wobei der zweite Spreizkrallenschenkel (4) und ein zweiter Blattfederschenkel parallel ausgerichtet sind, dadurch gekennzeichnet, daß auf dem zweiten Spreizkrallenschenkel (4) das freie Ende des zweiten Blattfederschenkels (6) der federelastischen Blattfeder (2) befestigt ist, wobei der zweite Blattfederschenkel (6) gegenüber einem ersten Blattfederschenkel (5) der Blattfeder (2) unter einem Blattfederknickwinkel β<α abgewinkelt ist, und daß am freien Ende des ersten Blattfederschenkels (5) ein auf Teilen des Tragrings (12) aufliegendes und sich dort unter Vorspannung abstützendes Gleitbogenstück (7) ausgebildet ist.

2. Elektrisches Installationsgerät nach dem Oberbegriff des Anspruchs 1, wobei die Blattfedern an Teilen des Tragrings (12) befestigt sind, dadurch gekennzeichnet, daß ein zweiter Blattfederschenkel (6) und der zweite Spreizkrallenschenkel (4) parallel ausgerichtet sind, daß der zweite Blattfederschenkel (6) gegenüber dem ersten Blattfederschenkel (5) der Blattfeder (2) unter einem Blattfederknickwinkel β<α abgewinkelt ist und daß am freien Ende des zweiten Blattfederschenkels (6) ein auf dem zweiten Spreizkrallenschenkel (4) aufliegendes und sich dort unter Vorspannung abstütgendes Gleitbogenstück (7) ausgebildet ist.

3. Elektrisches Installationsgerät nach Anspruch 1, dadurch gekennzeichnet, daß die jeweilige Spreizkralle (1) und die zugeordnete Blattfeder (2) materialeinheitlich einstückig ausgebildet sind.

4. Elektrisches Installationsgerät nach Anspruch 2, dadurch gekennzeichnet, daß der Tragring (12) und die zugeordnete Blattfeder (2) materialeinheitlich einstückig ausgebildet sind.

## Claims

1. Electrical installation device, which is fixed in a flush-mounting wall installation box with the aid of an expanding-claw mounting, comprising a support ring (12) and two expanding-claws (1) which are arranged opposite one another in pairs at this ring and are in each case acted upon by a leaf-spring (2), the first expanding-claw leg (3) of which is attached to parts of the support ring (12) by means of an adjusting screw (9) and the second expanding-claw leg (4) of which is angled at an expanding-claw bending angle α with respect to the first expanding-claw leg (3), the second expanding-claw leg (4) and a second leaf-spring leg being aligned in parallel, characterized in that the free end of the second leaf-spring leg (6) of the spring-elastic leaf-spring (2) is attached on the second expanding-claw leg (4), in which arrangement the second leaf-spring leg (6) is angled at a leaf-spring bending angle β < α with respect to a first leaf-spring leg (5) of the leaf-spring (2), and in that a sliding arc piece (7) resting on parts of the support ring (12) and supported there under pretension is formed at the free end of the first leaf-spring leg (5).

2. Electrical installation device according to the precharacterizing clause of Claim 1, in which the leaf-springs (2) are attached to parts of the support ring (12), characterized in that a second leaf-spring leg (6) and the second expanding-claw leg (4) are aligned in parallel and in that the second leaf-spring leg (6) is angled at a leaf-spring bending angle β < α with respect to the first leaf-spring leg (5) of the leaf-spring (2), and in that a sliding arc piece (7) resting on the second expanding-claw leg (4) and supported there with pretension is formed at the free end of the second leaf-spring leg (6).

3. Electrical installation device according to Claim 1, characterized in that the respective expanding-claw (1) and the associated leaf-spring (2) are constructed in one piece of uniform material.

4. Electrical installation device according to Claim 2, characterized in that the support ring (12) and the associated leaf-spring (2) are constructed in one piece of uniform material.

## Revendications

1. Appareil d'installation électrique qui peut être monté par un système de fixation à griffes dans une boîte de montage encastrée, comportant un support annulaire (12) et, disposées sur celui-ci, en regard deux à deux, deux griffes (1) sollicitées chacune par un ressort à lames (2), griffes dont la première aile (3) est fixée au moyen d'une vis réglable (9) sur des parties du support annulaire (12) et dont la seconde aile (4) est pliée suivant un angle de pliage α de griffe par rapport à la première (3), la deuxième aile (4) de la griffe et une deuxième aile du ressort à lames étant parallèles, caractérisé par le fait que l'extrémité libre de la deuxième aile (6) du ressort à lames est fixée sur la deuxième aile (4) de la griffe, la deuxième aile (6) du ressort étant pliée suivant un angle de pliage β < α de ressort par rapport à une première aile (5) du ressort à lames et par le fait qu'une partie de glissement (7) arquée, qui prend appui sur des parties du support annulaire (12) et y est appliquée avec précontrainte, est agencée à l'extrémité libre de la première aile (5) du ressort.

2. Appareil d'installation électrique selon le préambule de la revendication 1, dans lequel les ressorts à lame sont fixés sur des parties du support annulaire (12), caractérisé par le fait qu'une deuxième aile (6) de ressort et la deuxième aile (4) de griffe sont parallèles, par le fait que la deuxième aile (6) de ressort est pliée suivant un angle de pliage β < α de ressort et par le fait qu'une partie de glissement (7) arquée, qui prend appui sur la deuxième aile (4) de griffe et y est appliquée avec précontrainte, est agencée à l'extrémité libre de la deuxième aile (6) du ressort.

3. Appareil d'installation électrique selon la revendication 1, caractérisé par le fait que la griffe (1) et le ressort à lames (2) correspondant sont réalisés d'une pièce en un matériau homogène.

4. Appareil d'installation électrique selon la revendication 2, caractérisé par le fait que le support annulaire (12) et le ressort à lames (2) correspondant sont réalisés d'une pièce en un matériau homogène.
